(19) Europäisches Patentamt
European Patent Office
Office européen des brevets

(11) **EP 1 728 249 B1**

(12) **EUROPEAN PATENT SPECIFICATION**

(45) Date of publication and mention
of the grant of the patent:
**27.08.2008 Bulletin 2008/35**

(21) Application number: **05708948.4**

(22) Date of filing: **04.03.2005**

(51) Int Cl.:
*G11B 19/28* (2006.01)    *G11B 19/02* (2006.01)

(86) International application number:
**PCT/IB2005/050817**

(87) International publication number:
**WO 2005/091286 (29.09.2005 Gazette 2005/39)**

(54) **METHOD AND DEVICE FOR SCANNING A DISC-SHAPED INFORMATION STORAGE MEDIUM**

VERFAHREN UND EINRICHTUNG ZUM SCANNEN EINES SCHEIBENFÖRMIGEN
INFORMATIONSSPEICHERMEDIUMS

PROCEDE ET DISPOSITIF PERMETTANT DE BALAYER UN SUPPORT DE STOCKAGE
D'INFORMATIONS EN FORME DE DISQUE

(84) Designated Contracting States:
**AT BE BG CH CY CZ DE DK EE ES FI FR GB GR
HU IE IS IT LI LT LU MC NL PL PT RO SE SI SK TR**

(30) Priority: **17.03.2004 EP 04101085**

(43) Date of publication of application:
**06.12.2006 Bulletin 2006/49**

(73) Proprietor: **Koninklijke Philips Electronics N.V.
5621 BA Eindhoven (NL)**

(72) Inventors:
• **MESUT, Ozcan
NL-5656 AA Eindhoven (NL)**

• **LUITJENS, Steven, B.
NL-5656 AA Eindhoven (NL)**
• **DE BOER, Bart, M.
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**EP-A- 1 052 638**

**Description**

FIELD OF THE INVENTION

The present invention relates in general to a disc drive apparatus for writing information to a disc-shaped information storage medium and for reading from a disc-shaped information carrier. More particularly, the present invention relates to a disc drive apparatus for handling an optical storage disc; hereinafter, such disc drive apparatus will also be indicated as "optical disc drive". It is to be noted, however, that the present invention is not restricted to optical discs, since the gist of the present invention is also applicable to other types of discs.

BACKGROUND OF THE INVENTION

As is commonly known, an optical storage disc comprises at least one track of storage space, either in the form of a continuous spiral or in the form of multiple concentric circles, where information may be stored in the form of a data pattern. Optical discs may be read-only type, where information is recorded during manufacturing, which information can only be read by a user. The optical storage disc may also be a writable type, where information may be stored by a user. For writing information in the storage space of the optical storage disc, or for reading information from the disc, an optical disc drive comprises, on the one hand, rotating means for receiving and rotating an optical disc, and on the other hand optical scanning means for generating an optical beam, typically a laser beam, and for scanning the storage track with said laser beam. Since the technology of optical discs in general, i.e. the way in which information can be stored in an optical disc, and the way in which optical data can be read from an optical disc, is commonly known, it is not necessary here to describe this technology in more detail.

For rotating the optical disc, an optical disc drive typically comprises a motor, which drives a hub engaging a central portion of the optical disc. Usually, the motor is implemented as a spindle motor, and the motor-driven hub may be arranged directly on the spindle axle of the motor.

For optically scanning the rotating disc, an optical disc drive comprises a light beam generator device (typically a laser diode), an objective lens for focussing the light beam in a focal spot on the disc, and an optical detector for receiving the reflected light reflected from the disc and for generating an electrical detector output signal. The optical detector usually comprises multiple detector segments, each segment providing an individual segment output signal.

During operation, the light beam should remain focussed on the disc. To this end, the objective lens is arranged axially displaceable, and the optical disc drive comprises focal actuator means for controlling the axial position of the objective lens. Further, the focal spot should remain aligned with a track or should be capable of being displaced from a current track to a new track. To this end, at least the objective lens is mounted radially displaceable, and the optical disc drive comprises radial actuator means for controlling the radial position of the objective lens.

A control circuit drives the motor, and drives the actuator means, so as to position the focus spot of the laser beam with respect to the correct track, and to rotate the disc at a desired velocity. In setting the disc velocity, the control circuit may apply different control strategies. In one control strategy, the disc motor is driven to rotate at a constant rotational frequency, causing the disc to rotate at a constant angular velocity; this mode of operation is indicated as CAV mode.

In another control strategy, the rotational frequency of the disc motor is selected in relation to the radial position of the laser beam focus spot, such that the disc rotates at a constant linear velocity; this mode of operation is indicated as CLV mode. Assuming that the linear bit density of the track is constant, CLV mode leads to a constant bit rate, whereas CAV mode leads to a bit rate which is higher for the outer track than for the inner track.

A disc drive apparatus may be capable of operating in one mode only, at one fixed setting. For instance, a disc drive may only be capable of operating in a CAV mode at one fixed angular velocity independent of the radius. Or, a disc drive may only be capable of operating in a CLV mode at one fixed linear velocity. However, the present invention relates to a disc drive apparatus having a variable velocity setting and/or being capable to switch operating mode, i.e. to selectively operate in CAV mode or CLV mode; this freedom of selecting velocity and/or mode will generally be referred to as setting mode/velocity.

Disc drive devices capable of setting mode/velocity are known perse. For instance, reference is made to EP-1.052.638, which describes a disc drive which divides a disc into a plurality of zones. For each of the zones, an operational mode is fixed, and an associated velocity is fixed. So, one zone may be operated in CAV mode at a first rotational speed, a second zone may be operated in CAV mode at a second rotational speed, and a third zone may be operated in CLV mode at a certain linear velocity, etc. However, the distinction between zones, and the modes and velocities associated with the zones, are defined in advance, the definitions being fixed. A disadvantage of such a pre-defined definition of operating mode and velocity is that the apparatus is usually not operating as efficiently as possible in terms of power consumption.

The present invention aims to overcome this disadvantage.

More particularly, an objective of the present invention is to provide an improved disc drive apparatus, capable of operating at reduced power consumption without compromising performance.

SUMMARY OF THE INVENTION

According to an important aspect of the present invention, a disc drive is capable of dynamically selecting operating mode and/or velocity and/or execution order on the basis of actions to be taken, with a view to minimizing the power consumption of those actions.

According to a further important aspect of the present invention, a disc drive is capable of receiving a plurality of action commands, to store the commands in a command buffer, to calculate a most efficient execution order for these commands, and to perform the commands in the calculated most efficient execution order.

According to a preferred embodiment of the present invention, a disc drive is capable of receiving a plurality of action commands, to store the commands in a command buffer, to calculate a most efficient execution order for these commands in combination with a most efficient mode and/or velocity selection, and to perform the commands in the calculated most efficient execution order at the correspondingly selected most efficient mode and/or velocity.

BRIEF DESCRIPTION OF THE DRAWINGS

These and other aspects, features and advantages of the present invention will be further explained by the following description with reference to the drawings, in which same reference numerals indicate same or similar parts, and in which:

Figure 1 schematically illustrates relevant components of an optical disc drive apparatus;
Figures 2A and 2B are graphs illustrating CAV mode and CLV mode, respectively;
Figures 3A and 3B are graphs illustrating CAV mode and CLV mode, respectively, for a case where the velocity depends on a radius range of the disc;
Figure 4 is a graph illustrating selectable CAV mode and CLV mode;
Figures 5A and 5B are graphs illustrating the amount of energy required for reading/writing a certain amount of data in CAV mode or in CLV mode;
Figure 6 is a flow diagram illustrating a first embodiment of a read/write process according to the present invention;
Figure 7 is a flow diagram illustrating a second embodiment of a read/write process according to the present invention;
Figure 8 is a flow diagram illustrating a third embodiment of a read/write process according to the present invention;
Figure 9 is a flow diagram illustrating a fourth embodiment of a read/write process according to the present invention;
Figure 10 is a flow diagram illustrating a fifth embodiment of a read/write process according to the present invention.

DETAILED DESCRIPTION OF THE INVENTION

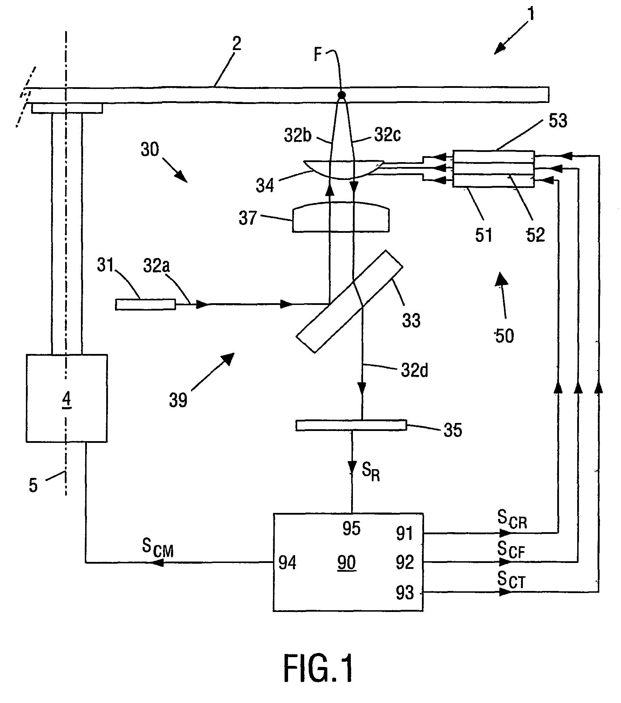

Figure 1 schematically illustrates an optical disc drive apparatus 1, suitable for storing information on or reading information from an optical disc 2, typically a DVD or a CD. For rotating the disc 2, the disc drive apparatus 1 comprises a motor 4 fixed to a frame (not shown for sake of simplicity), defining a rotation axis 5.

The disc drive apparatus 1 further comprises an optical system 30 for scanning tracks (not shown) of the disc 2 by an optical beam. More specifically, in the exemplary arrangement illustrated in Figure 1, the optical system 30 comprises a light beam venerating means 31, typically a laser such as a laser diode, arranged to generate a light beam 32. In the following, different sections of the light beam 32, following an optical path 39, will be indicated by a character a, b, c, etc added to the reference numeral 32.

The light beam 32 passes a beam splitter 33, a collimator lens 37 and an objective lens 34 to reach (beam 32b) the disc 2. The light beam 32b reflects from the disc 2 (reflected light beam 32c) and passes the objective lens 34, the collimator lens 37 and the beam splitter 33 (beam 32d) to reach an optical detector 35. The objective lens 34 is designed to focus the light beam 32b in a focus spot F on a recording layer (not shown for sake of simplicity) of the disc.

The disc drive apparatus 1 further comprises an actuator system 50, which comprises a radial actuator 51 for radially displacing the objective lens 34 with respect to the disc 2. Since radial actuators are known per se, while the present invention does not relate to the design and functioning of such a radial actuator, it is not necessary here to discuss the design and functioning of a radial actuator in great detail.

For achieving and maintaining a correct focusing, exactly on the desired location of the disc 2, said objective lens 34 is mounted so as to be axially displaceable, while further the actuator system 50 also comprises a focus actuator 52 arranged for axially displacing the objective lens 34 with respect to the disc 2. Since focus actuators are known per se, while the design and operation of such a focus actuator is not a subject of the present invention, it is not necessary here to discuss the design and operation of such a focus actuator in great detail.

For achieving and maintaining a correct tilt position of the objective lens 34, the objective lens 34 may be mounted pivotably; in such a case, as shown, the actuator system 50 also comprises a tilt actuator 53 arranged for pivoting the objective lens 34 with respect to the disc 2. Since tilt actuators are known per se, while the design and operation of such a tilt actuator is not a subject of the present invention, it is not necessary here to discuss the design and operation of such a tilt actuator in great detail.

It is further noted that means for supporting the objective lens with respect to an apparatus frame, and means for axially and radially displacing the objective lens, as well as means for pivoting the objective lens, are generally known per se. Since the design and operation of such supporting and displacing means is not a subject of the present invention, it is not necessary here to discuss their design and operation in great detail.

It is further noted that the radial actuator 51, the focus actuator 52 and the tilt actuator 53 may be implemented as one integrated actuator.

The disc drive apparatus 1 further comprises a control circuit 90 having a first output 91 coupled to a control input of the radial actuator 51, having a second output 92 coupled to a control input of the focus actuator 52, having a third output 93 coupled to a control input of the tilt actuator 53, and having a fourth output 94 connected to a control input of the motor 4. The control circuit 90 is designed to generate at its first control output 91 a control signal $S_{CR}$ for controlling the radial actuator 51, to generate at its second output 92 a control signal $S_{CF}$ for controlling the focus actuator 52, to generate at its third output 93 a control signal $S_{CT}$ for controlling the tilt actuator 53, and to generate at its fourth output 94 a control signal $S_{CM}$ for controlling the motor 4.

The control circuit 90 further has a read signal input 95 for receiving a read signal $S_R$ from the optical detector 35.

For scanning the optical disc 2 (in a reading or writing operation), the control circuit 90 drives the motor 4 (control signal $S_{CM}$) to rotate at a certain rotational frequency. If the disc 2 is mounted directly on an output shaft of the motor (as depicted in the Figure), the rotational frequency of the disc 2 is identical to the rotational frequency of the motor, but it is alternatively possible that the disc drive apparatus 1 comprises a transmission system between motor and disc, in which case the rotational frequency of the disc 2 may differ from the rotational frequency of the motor, as will be clear to a person skilled in the art. In the following, the rotational frequency of the disc 2 will be indicated as $\omega$ [$s^{-1}$]; the rotational velocity of the disc will be $2\pi\omega$ [rad/s].

The control circuit 90 may operate in a CAV mode, in which case the rotational frequency $\omega$ is independent of the radial position of the scanning focus spot F. The control circuit 90 may also operate in a CLV mode, in which case the linear velocity V of the scanning focus spot F with respect to the track is independent of the radial position of the scanning focus spot F.

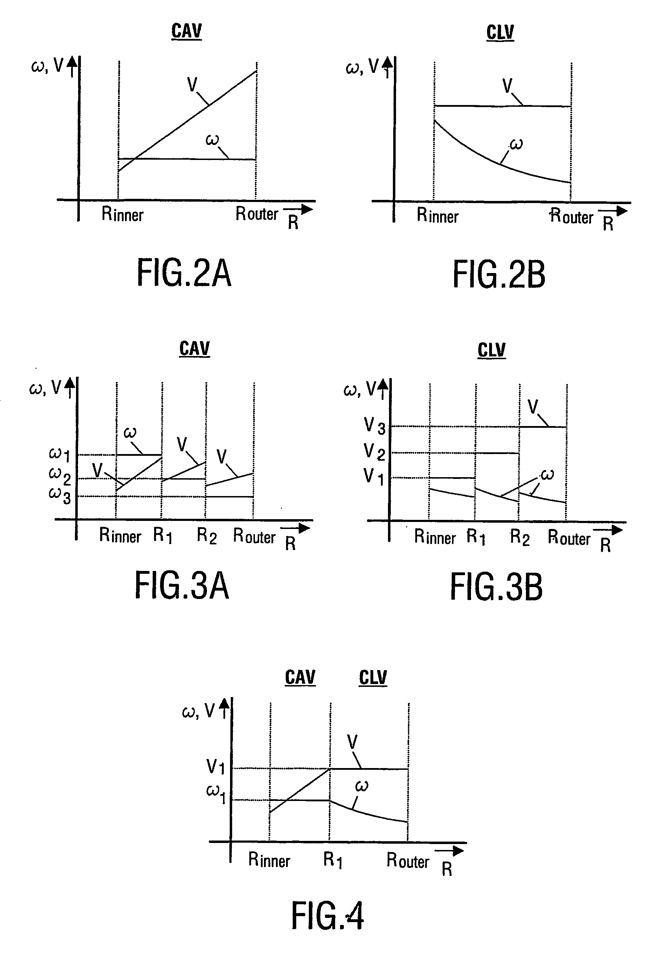

$\omega$ and V follow the relationship $V = 2\pi\omega \cdot R$, R being the radius of the radial position of the scanning focus spot F. In the case of operating in CAV mode, the linear scanning velocity is proportional to the radius of the radial position of the scanning focus spot F. In the case of operating in CLV mode, the rotational frequency $\omega$ of the disc is inversely proportional to the radius of the radial position of the scanning focus spot F. This is illustrated in Figures 2A and 2B, which are schematical graphs indicating $\omega$ and V (vertical axis, arbitrary units) as a function of R (horizontal axis, arbitrary units) for the case of CAV (Figure 2A) and CLV (Figure 2B).

In Figures 2A and 2B, $\omega$ and V, respectively, are constant over the entire range of R from the innermost radius $R_{inner}$ to the outermost radius $R_{outer}$. The control circuit 90 of the disc drive 1 according to the present invention is preferably capable of varying the value of $\omega$ or V, respectively, depending on circumstances, as will be explained later. An example of this is illustrated in Figures 3A and 3B, which are graphs comparable to Figures 2A and 2B, respectively.

Figure 3A illustrates a case where the control circuit 90 is operating in CAV mode at a first constant rotational frequency $\omega1$ in a first range from the innermost radius $R_{inner}$ to a certain first radius R1; the control circuit 90 is operating in CAV mode at a second constant rotational frequency $\omega2$ in a second range from said first radius R1 to a certain second radius R2; and the control circuit 90 is operating in CAV mode at a third constant rotational frequency $\omega3$ in a third range from said second radius R2 to the outermost radius $R_{outer}$.

Figure 3B illustrates a case where the control circuit 90 is operating in CLV mode at a first constant linear velocity V1 in a first range from the innermost radius $R_{inner}$ to a certain first radius R1; the control circuit 90 is operating in CLV mode at a second constant linear velocity V2 in a second range from said first radius R1 to a certain second radius R2; and the control circuit 90 is operating in CLV mode at a third constant linear velocity V3 in a third range from said second radius R2 to the outermost radius $R_{outer}$.

In Figures 2A/3A and 2B/3B, the control circuit 90 is always operating in CAV mode or CLV mode, respectively, albeit at different values for the constant rotational frequency and the constant linear velocity, respectively. The control circuit 90 of the disc drive 1 according to the present invention is preferably capable of selectively operating in CAV mode or in CLV mode, depending on circumstances, as will be explained later. An example is illustrated in Figure 4, which is a comparable to Figures 2A and 2B. Figure 4 illustrates a case where the control circuit 90 is operating in CAV mode at a certain constant rotational frequency $\omega1$ in a first range from the innermost radius $R_{inner}$ to a certain first radius R1. The control circuit 90 is operating in CLV mode at a certain constant linear velocity V1 in a second range from said first radius R1 to the outermost radius $R_{outer}$.

According to an important aspect of the present invention, the control circuit 90 is designed to select its mode of operation (either CAV mode or CLV mode), and/or the value of constant rotational frequency, and/or the value of constant linear velocity, on the basis of power consumption considerations, as will be described later.

For a disc drive apparatus executing a task, the amount of energy consumed can be different, depending on whether the drive is operating in CAV mode or in CLV mode. In this respect, the phrase "executing a task" is used to cover a variety of individual activities, such as performing a jump from a start track to a target track, reading/writing a certain amount of data from/at a certain track location, etc. For the activity "reading" or "writing", the power consumption will be substantially equal in CAV and in CLV mode, but the time required for reading/writing a certain amount of data can be different (in this respect, it is noted that the consumed energy is equal to the consumed power multiplied by the required time, or, more accurately, ENERGY = ∫ {POWER(t)d(t)}. The difference will depend on the radius of the data storage location, but also on the state the disc drive is in when starting the activity. For instance, scanning at the inner radius of the disc is substantially faster in CLV mode as compared to CAV mode, assuming that the rotational frequency at the outer radius is the same for the CLV mode and the CAV mode. Thus, the energy consumption associated with reading/writing a certain amount of data from/at the inner radius is substantially less in CLV mode as compared to CAV mode. However, when the disc drive is idle or the current location of the focus spot F is at the outer radius, the required scanning operation would require a spinning-up of the disc to the corresponding rotational frequency at the inner radius (see Figure 2B), which is an activity that consumes much energy, whereas maintaining a constant rotational frequency mainly requires only energy sufficient to compensate friction.

Thus, depending on circumstances, it may be more advantageous to use CAV mode or to use CLV mode. Although the target radius plays a role, as does the start radius, these parameters, taken alone, are not decisive: for instance, if the disc drive is currently addressing the outer disc radius while operating in CAV mode, the jump to the inner radius does not necessarily involve any spinning-up, and it may be advantageous to switch from CAV mode to CLV mode. As another example, if the amount of data to be handled is only very small, the lower power consumption associated with the scanning action does not compensate the energy consumed by spinning-up the disc, and it may be advantageous to continue in CAV mode, whereas, if the amount of data to be handled is large, the balance can tip in favour of using CLV mode.

In the following, a more elaborate discussion will be given of many aspects influencing the power consumption of an optical disc drive, especially in conjunction with the choice between CAV and CLV mode.

A disc drive apparatus comprises many components that consume power, such as the disc motor, the actuator systems, the laser device, the laser driver, bit detection and analog preprocessing circuitry, digital electronics, buffer memory, DC/DC converter.

When a disc drive apparatus is given a command (for writing and/or reading), the following phases are passed:

**Initial spin-up**: Assuming the disc drive is idle and the disc is not rotating, the disc has to be spun-up to a certain rotational frequency. The motor and motor driver are active; the laser, digital electronics, analog preprocessing circuitry and actuator systems are OFF.

When operating in CAV mode, the disc is always spun-up to the same rotational frequency, independent of radius; when operating in CLV mode, the disc is spun-up to a rotational frequency depending on the radius: at the inner radius, the disc is spun-up to a higher rotational frequency as compared to the outer radius. At the inner radius, the difference in rotational frequency can amount to a factor of 2, whereas at the outer radius, the rotational frequency will usually be the same for CAV and CLV. Depending on the radius, the energy consumption can be substantially higher in CLV mode as compared to CAV mode.

**Initialize optics**: After initial spin-up, the optical system is initialized. The motor is rotating, normally at a constant frequency. The actuator systems for focus and tracking are turned on, as is the laser. The power consumption is mainly determined by the laser and the laser driver.

**Spin-up/down**: When operating in CAV mode, no change of rotational frequency is required, but when operating in CLV mode, and when a jump to another location on the disc is necessary, the rotational frequency of the disc is to be changed. The change of rotational frequency can be performed simultaneously with a search action.

**Search**: The sledge is moving to the correct position with respect to the disc. The laser, the actuator systems for focus and tracking, the analog preprocessing circuitry, and the digital electronics are ON. The search phase may partially overlap with the spin-up/down phase and/or the initial spin-up phase. The power consumption is mainly determined by the laser, the laser driver, and the signal processing electronics. The search is performed in the same way, whether for CAV mode or CLV mode, so there will be little or no difference in energy consumption.

**Read/Write**: The actual reading/writing action is performed. The laser is ON. The analog preprocessing circuitry and the digital electronics are ON for performing detection, equalization, error correction. Also, the buffer is ON. The power consumption is mainly determined by the laser, the laser driver, and the signal processing electronics.

In CLV mode, the read/write time is independent of location on disc. However, the stationary power consumption of the motor increases from the outer radius to the inner radius, because the rotational frequency increases from the outer radius to the inner radius.

In CAV mode, the stationary power consumption of the motor is independent of location on disc. However, the read/write time increases from the outer radius to the inner radius.

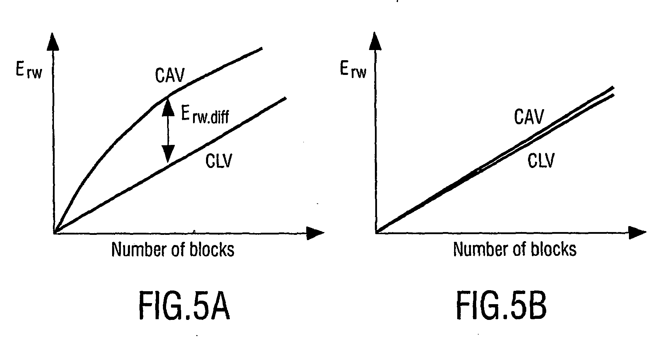

Figures 5A and 5B are graphs illustrating the amount of energy required ($E_{Rw}$; vertical axis) for reading/writing a certain amount of data (number of data blocks; horizontal axis). Figure 5A relates to a situation where reading/writing takes place at the inner radius of the disc, while figure 5B relates to a situation where reading/writing takes place close to the outer radius of the disc. Each Figure showag two curves, one for operation in CAV mode and one for operation in CLV mode.

In general, when comparing CLV mode with CAV mode, $E_{Rw}$ is smaller for CLV mode than for CAV mode, because the read/write time is shorter in CLV mode while the stationary power consumption of the motor is only a little bit higher in CLV mode. Close to the outer radius of the disc, the difference between the CAV characteristic and the CLV characteristic is practically zero, at least if the disc velocity is the same in both cases, which usually is the case.

When multiple read/write actions are to be performed sequentially, the CLV mode is more energy-efficient than the CAV mode, as can be seen from Figures 5A-5B. However, when multiple read/write actions are to be performed with random disc accesses, the CLV mode involves changing the rotational frequency (speed-up/speed-down), which requires extra energy. As long as this extra energy is less than the energy difference $E_{Rw,diff}$ (Figure 5A), the CLV mode is still advantageous, otherwise the CAV mode becomes advantageous.

The total energy $E_{COMMAND}$ required for executing a command can be expressed as:

$$E_{COMMAND} = E_{UD} + E_{SEARCH} + E_{RW}$$

wherein
$E_{UD}$ is the amount of energy required for spinning up or down,
$E_{SEARCH}$ is the amount of energy required for searching,
$E_{RW}$ is the amount of energy required for reading/writing.
The CLV mode is advantageous over the CAV mode, if the corresponding total energy $E_{COMMAND,CLV}$ is less than the total energy $E_{COMMAND,CAV}$, i.e. $E_{COMMAND,CLV} < E_{COMMAND,CAV}$

This condition is satisfied if:

$$E_{UD,CLV} + E_{SEARCH,CLV} + E_{RW,CLV} < E_{UD,CAV} + E_{SEARCH,CAV} + E_{RW,CAV},$$

or

$$E_{UD,CLV} + E_{RW,CLV} < E_{UD,CAV} + E_{RW,CAV} \text{ (assuming } E_{SEARCH,CLV} = E_{SEARCH,CAV}),$$

or

$$E_{UD,CLV} - E_{UD,CAV} < E_{RW,CAV} - E_{RW,CLV} = E_{RW,diff}$$

Whether or not this condition is satisfied depends, among other things, on the condition the disc drive is in: if the disc is already spinning, $E_{UD,CAV} = 0$, whereas $E_{UD,CLV} = 0$ only if the disc is already spinning at the correct frequency.

A disc drive may receive multiple commands. In a disc drive in accordance with the principles of the present invention, these commands are not necessarily executed immediately on receipt, and they are not necessarily executed in the order of receipt. The disc drive is adapted to store the commands in a waiting queue, and to execute the commands in command batches once the queue contains a sufficient number of commands, or after a predetermined waiting time has passed. The disc drive in accordance with the principles of the present invention is further adapted to determine the execution order of the commands in the queue such that the overall amount of energy required for the entire command batch is as low as possible.

A disc drive in accordance with the principles of the present invention can determine such a most efficient execution order with one and the same scanning mode (CAV, CLV) for all commands, and it is even possible that the disc drive is not capable of changing scanning mode. Preferably, however, a disc drive capable of changing scanning mode is adapted to select the scanning mode for each command, such that the overall amount of energy required for executing all commands with the selected scanning mode in the determined execution order is as low as possible.

Consider a case where the command queue contains three commands C1, C2, C3, received in this order. The disc drive can execute these commands in the order C1-C2-C3 as received, or in the opposite order C3-C2-C1, or for instance in the order C1-C3-C2, or in any other order. The total number of possible orders in this case is equal to 6; in general, when the queue contains n commands, the total number of possible orders in this case is equal to n!

Each command can be executed in CAV mode or in CLV mode; more particularly, the first command can be executed in CAV mode or in CLV mode, the second command can be executed in CAV mode or in CLV mode, the third command can be executed in CAV mode or in CLV mode. In the case of three commands, there are 8 possible combinations ($2^3$) for mode selection. In general, when the number of mode possibilities is equal to m, the number of possibilities is equal to $m^n$.

Thus, in a case where the command queue contains three commands C1, C2, C3, which each can be executed in CAV mode or in CLV mode, the total number of possible combinations is equal to 48. In accordance with the present invention, the disc drive is adapted to select, from these 48 combinations, the combination which is associated with the minimum amount of energy consumption.

EXAMPLE 1

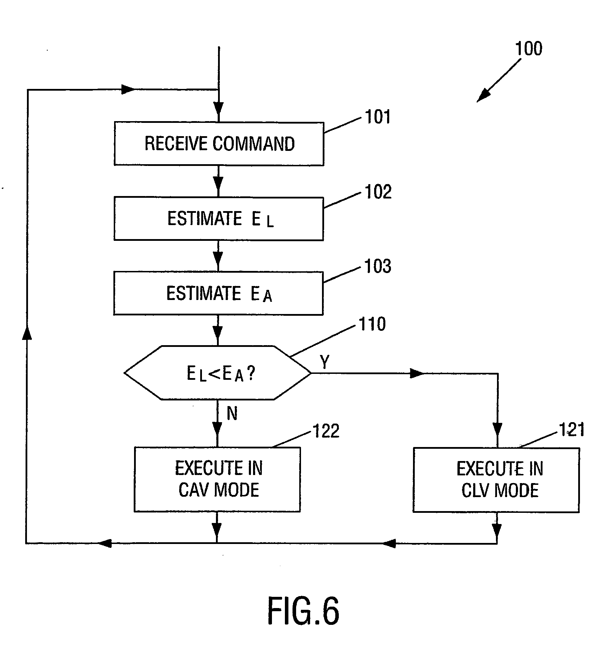

A first embodiment of a read/write process 100 in accordance with the present invention will be explained with reference to Figure 6. In a first step 101, a read/write command is received. The control circuit 90 estimates the amount of energy $E_L$ expected to be consumed when this command is executed in CLV mode [step 102], and estimates the amount of energy $E_A$ expected to be consumed when this command is executed in CAV mode [step 103]. As should be clear to a person skilled in the art, the steps 102 and 103 may be executed in opposite order, or simultaneously.

Then, the control circuit 90 decides whether $E_L$ is larger or smaller than $E_A$ [step 110]. If the control circuit 90 finds that $E_L$ is smaller than $E_A$, the command is executed in CLV mode [step 121], otherwise the command is executed in CAV mode [step 122]. After executing the command, the process continues at first step 101.

In calculating the amount of energy expected to be consumed when executing the command, the control circuit 90 takes into account the conditions and parameters indicated earlier, such as current radius, target radius, current rotational frequency, amount of blocks to read/write, etc; this applies to the following examples also.

In the example, only two possible scanning modes (CAV; CLV) are taken into account. It should be clear to a person skilled in the art that similar considerations can be made when the control circuit 90 has more possible scanning modes to choose from. The same applies to the following examples also.

EXAMPLE 2

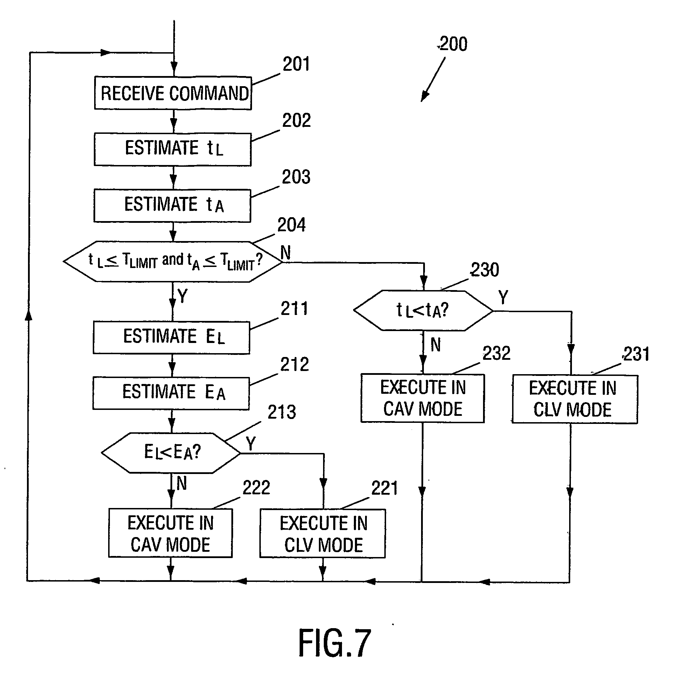

A second embodiment of a read/write process 200 in accordance with the present invention will be explained with reference to Figure 7. In a first step 201, a read/write command is received, the command containing a command completion time limit $T_{LIMIT}$. This is a restriction relating to the moment in time when the command must be completed, i.e. the speed at which the read/write process is executed. Such restriction applies in-cases of time-critical data, such as for instance audio data, video data, etc.

The control circuit 90 estimates the amount of time $t_L$ expected to be needed when this command is executed in CLV mode [step 202], and estimates the amount of time $t_A$ expected to be needed when this command is executed in CAV mode [step 203]. As should be clear to a person skilled in the art, the steps 202 and 203 may be executed in opposite order, or simultaneously.

Then, the control circuit 90 compares $t_L$ and $t_A$ with the command completion time limit $T_{LIMIT}$ [step 204]. If both $t_L$ and $t_A$ are smaller than the command completion time limit $T_{LIMIT}$, processing continues similarly as described with reference to Figure 6 [steps 211-222], and the command is executed in the scanning mode expected to consume the lowest amount of energy.

If any one of $t_L$ and $t_A$ is larger than the command completion time limit $T_{LIMIT}$, or if both $t_L$ and $t_A$ are larger than the command completion time limit $T_{LIMIT}$, the completion time consideration is considered more important than the energy consumption consideration, and the command is executed in the scanning mode corresponding to the shortest amount of estimated completion time [steps 230-232].

After executing the command, the process continues at first step 201.

In the above-described embodiments, the control circuit calculates the estimated amount of energy on a command-by-command basis. The decision whether a command is executed in a CAV mode or in a CLV mode is made for each command individually. The commands are executed in the order in which they are received. In the following examples, multiple commands are collected in a queue buffer memory, and the commands may be executed in an order differing from the original order. The scanning mode may be selected individually for each command.

EXAMPLE 3

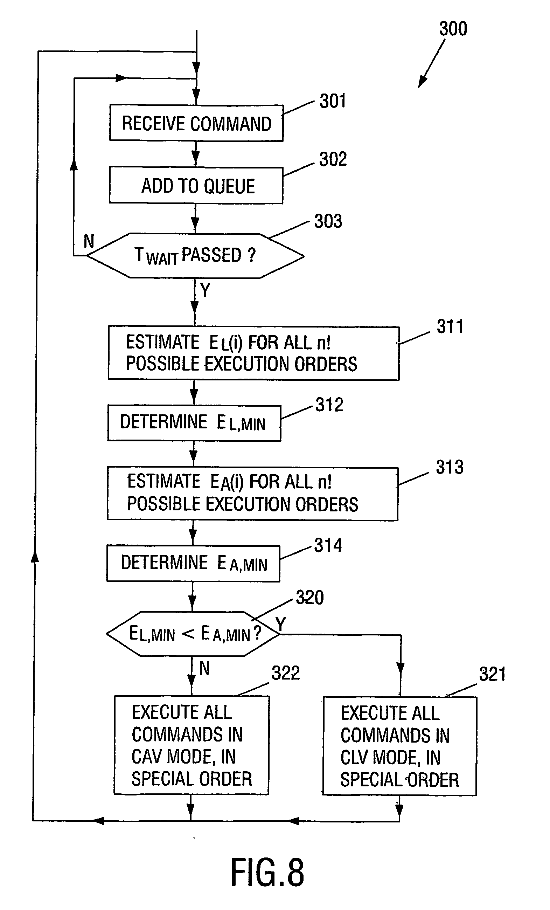

A third embodiment of a read/write process 300 in accordance with the present invention will be explained with reference to Figure 8. In a first step 301, a read/write command is received, and stored in the queue buffer memory [step 302]. These steps are repeated for subsequent commands, until a certain waiting time $T_{WAIT}$ has passed [step 303]; the number of commands now in the queue buffer memory is indicated as n. In an alternative embodiment (not illustrated), said steps are repeated for subsequent commands until the queue buffer memory contains a predefined number n of commands.

For all n! possible execution orders, the control circuit 90 estimates the amount of energy $E_L(i)$ expected to be consumed when these commands are executed in such order(i) in CLV mode [step 311], and determines the execution order consuming the lowest amount of energy $E_{L,MIN}$ [step 312]. Likewise, for all possible execution orders, the control circuit 90 estimates the amount of energy $E_A(i)$ expected to be consumed when these commands are executed in such order(i) in CAV mode [step 313], and determines the execution order consuming the lowest amount of energy $E_{A,MIN}$ [step 314]. Then, the control circuit 90 decides whether $E_{L,MIN}$ is larger or smaller than $E_{A,MIN}$ [step 320]. If the control circuit 90 finds that $E_{L,MIN}$ is smaller than $E_{A,MIN}$, all commands are executed in CLV mode in the execution order corresponding to the lowest amount of energy $E_{L,MIN}$ [step 321], otherwise all commands are executed in CAV mode in the execution order corresponding to the lowest amount of energy $E_{A,MIN}$ [step 322]. After executing the commands, the process continues at first step 301.

Thus, in this example, all commands are executed in the same scanning mode CAV or CLV, but the execution order is selected so that the amount of energy consumed is expected to be as low as possible.

EXAMPLE 4

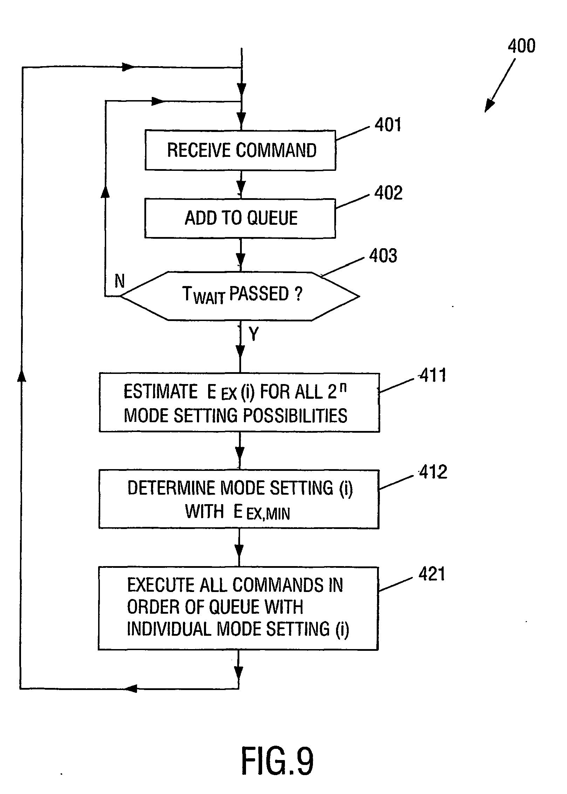

A fourth embodiment of a read/write process 400 in accordance with the present invention will be explained with reference to Figure 9. In a first step 401, a read/write command is received, and stored in the queue buffer memory [step 402]. These steps are repeated for subsequent commands, until a certain waiting time $T_{WAIT}$ has passed [step 403]; the number of commands now in the queue buffer memory is indicated as n. In an alternative embodiment (not illustrated), said steps are repeated for subsequent commands until the queue buffer memory contains a predefined number n of commands.

In this example, the commands are executed in the order they have been received, but for each command the scanning mode is selected individually, so that the amount of energy expected to be consumed by the combination of all n commands is expected to be as low as possible. It is noted that this is not necessarily equivalent to each command being individually executed as energy-efficiently as possible. For instance, it may very well be that two commands, when considered alone, are each executed most efficiently in CLV mode, but, when considered in combination, the combination may be executed more efficiently in CAV mode.

Thus, the first command may be executed in CAV mode or in CLV mode, giving two possibilities. Independent of the mode setting for the first command, the second command may be executed in CAV mode or in CLV mode, giving a total of four possibilities. Independent of the mode setting for the first and second commands, the third command may be executed in CAV mode or in CLV mode, giving a total of eight possibilities. A skilled person will understand that there are $2^n$ possibilities for scanning mode setting of n commands.

For all these $2^n$ scanning mode setting possibilities, the control circuit 90 estimates the amount of energy $E_{ex}(i)$ expected to be consumed when the commands are executed with the corresponding mode setting [step 411], and selects the mode setting requiring the lowest amount of energy $E_{ex,MIN}$ [step 412]. Then, the control circuit 90 executes the commands from the queue buffer memory in the order of receipt, setting for each command the scanning mode as determined in step 412 [step 421]. After executing the commands, the process continues at first step 401.

EXAMPLE 5

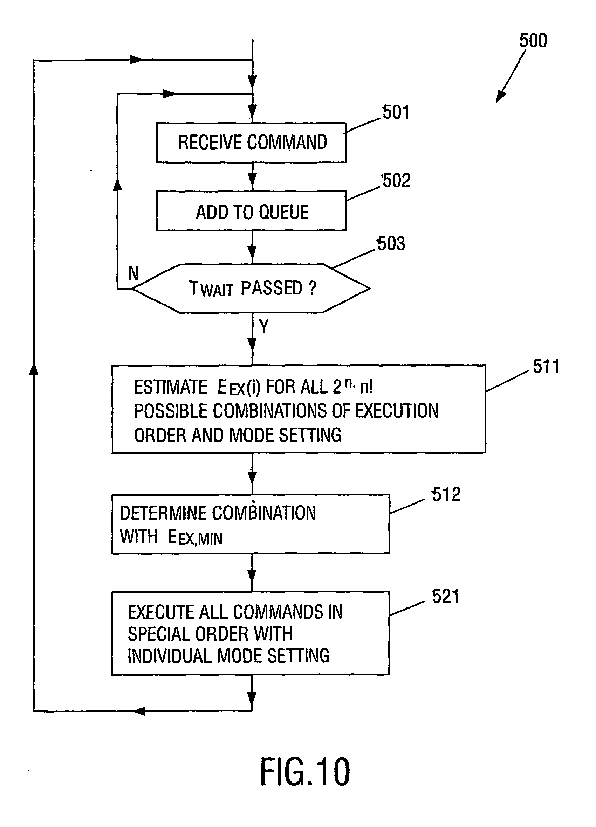

A fifth embodiment of a read/write process 500 in accordance with the present invention will be explained with reference to Figure 10. In a first step 501, a read/write command is received, and stored in the queue buffer memory [step 502]. These steps are repeated for subsequent commands, until a certain waiting time $T_{WAIT}$ has passed [step 503]; the number of commands now in the queue buffer memory is indicated as n. In an alternative embodiment (not illustrated), said steps are repeated for subsequent commands until the queue buffer memory contains a predefined number n of commands.

The fifth embodiment is a combination of the third and the fourth embodiment, in that the control circuit 90 considers all n! possible execution orders, and, for each possible execution order, considers all $2^n$ possibilities for scanning mode setting. Thus, for all $2^n \cdot n!$ possible combinations of execution order and scanning mode setting, the control circuit 90 estimates the amount of energy $E_{ex}(i)$ expected to be consumed [step 511], and selects the combination of execution order and scanning mode setting requiring the lowest amount of energy $E_{ex,MIN}$ [step 512]. Then, the control circuit 90 executes the commands from the queue buffer memory in the order as determined in step 512, while setting for each command the scanning mode as determined in step 512 [step 521]. After executing the commands, the process continues at first step 501.

EXAMPLE 6

A sixth embodiment of a read/write process in accordance with the present invention is a combination of the fifth and the second embodiment. In the sixth embodiment, the batch of n commands in the queue buffer memory is associated with an overall completion time limit, i.e. the combination of n commands must be completed within a certain time limit, either a predetermined fixed time limit or a time limit communicated to the control circuit 90 in association with the commands.

The process of the sixth embodiment is comparable to the process of the fifth embodiment as described above, with the exception that, in step 511, the control circuit 90 also estimates, for each of the $2^n \cdot n!$ possible combinations of execution order and scanning mode setting, the estimated time required for completing the batch of n commands; such a combination of execution order and scanning mode setting is only taken into account if the estimated overall completion time is less than said overall completion time limit Thus, even if a certain combination of execution order and scanning mode setting were to be more energy-efficient, this combination would not be selected if it involves more execution time than the time limit.

EXAMPLE 7

A seventh embodiment of a read/write process in accordance with the present invention is also a combination of the fifth and the second embodiment. In the seventh embodiment, the batch of n commands in the queue buffer memory contains at least one command which is associated with an individual completion time limit, i.e. this command must be completed within a certain time limit, either a predetermined fixed time limit or a time limit communicated to the control circuit 90 in association with this command. The batch of n commands may comprise multiple commands associated with individual time limits; the respective individual time limits may be mutually different.

The process of the seventh embodiment is comparable to the process of the fifth embodiment as described above, with the exception that, in step 511, the control circuit 90 also estimates, for each of the $2^n \cdot n!$ possible combinations of execution order and scanning mode setting, the estimated time required for completing each individual command (or at least the commands associated with an individual time limit); such a combination of execution order and scanning mode setting is only taken into account if, for each individual command, the estimated individual completion time is less than the corresponding individual completion time limit. Thus, even if a certain combination of execution order and scanning mode setting were to be more energy-efficient, this combination would not be selected if it involves even a single command surpassing its individual completion time limit.

It should be clear to a person skilled in the art that the present invention is not limited to the exemplary embodiments discussed above, but that several variations and modifications are possible within the protective scope of the invention as defined in the appending claims. For instance, even when maintaining the CLV mode, it is possible to select different linear velocities for executing different commands. The disc drive may have different pre-defined linear velocities available. When estimating a minimum amount of energy consumption, the disc drive may vary the linear velocity and perform calculations for each of the pre-defined linear velocities. These variations may be on the basis of one velocity for all tasks, or on the basis of independent velocities for different tasks.

Likewise, even when maintaining the CAV mode, it is possible to select different angular velocities for executing different commands. The disc drive may have different pre-defined angular velocities available. When estimating a minimum amount of energy consumption, the disc drive may vary the angular velocity and perform calculations for each of the pre-defined angular velocities. These variations may be on the basis of one velocity for all tasks, or on the basis of independent velocities for different tasks.

Further, a combination of the sixth and the seventh embodiment is possible, in that an overall completion time limit applies to the batch of scanning commands while also an individual execution time limit applies to at least one individual scanning command.

Further, overall and/or individual time constraints may also apply to the fourth and the fifth embodiment.

In the above, the present invention has been explained with reference to block diagrams, which illustrate functional blocks of the device according to the present invention. It is to be understood that one or more of these functional blocks may be implemented in hardware, where the function of such a functional block is performed by individual hardware components, but it is also possible that one or more of these functional blocks are implemented in software, so that the function of such a functional block is performed by one or more program lines of a computer program or a programmable device such as a microprocessor, microcontroller, digital signal processor, etc.

**Claims**

1. Method (100; 200; 300; 400; 500) for scanning a track of a disc-shaped storage medium (2), the method comprising the steps of:

   receiving (101; 201; 301; 401; 501) at least one scanning command;
   calculating (102,103; 211, 212; 311, 313; 411; 511) energy consumption estimates at different scanning mode settings (CAV; CLV);
   determining (110; 213; 312, 314,320; 412; 512) a scanning mode setting associated with minimal expected energy consumption;
   executing (121,122; 221, 222; 321, 322; 421; 521) said at least one scanning command at the thus determined scanning mode setting.

2. Method (100; 200) according to claim 1, the method comprising the steps of:

   receiving (101; 201) one scanning command;
   calculating (102; 211) the estimated amount of energy ($E_L$) consumed when this scanning command is executed in CLV mode;
   calculating (103; 212) the estimated amount of energy ($E_A$) consumed when this scanning command is executed in CAV mode;
   determining (110; 213) which scanning mode (CLV; CAV) is most energy efficient for executing this scanning command;
   executing (121,122; 221, 222) this scanning command in the most energy-efficient scanning mode (CLV; CAV).

3. Method (200) according to claim 2, wherein the scanning command is associated with a completion time limit ($T_{LIMIT}$), the method further comprising the steps of:

   calculating (202) the estimated completion time ($t_L$) when this scanning command is executed in CLV mode;
   calculating (203) the estimated completion time ($t_A$) when this scanning command is executed in CAV mode;
   examining (204) if any of the estimated completion times ($t_L$; $t_A$) exceeds the completion time limit ($T_{LIMIT}$);
   determining (230), if it is found that any of the estimated completion times ($t_L$; $t_A$) exceeds the completion time limit ($T_{LIMIT}$), which scanning mode (CLV; CAV) is most time efficient for executing this scanning command, and executing (231, 232) this scanning command in the most time efficient scanning mode (CLV; CAV).

4. Method (300) according to claim 1, the method comprising the steps of:

   receiving a plurality of n scanning commands, and placing these scanning commands in a queue buffer memory (301, 302, 303);
   calculating (311), for each of all n! possible execution orders of these n scanning commands, the corresponding estimated amount of energy ($E_L(i)$) consumed when these scanning commands are executed in CLV mode in the respective execution order(i);
   calculating (313), for each of all n! possible execution orders of these n scanning commands, the corresponding estimated amount of energy ($E_A(i)$) consumed when these scanning commands are executed in CAV mode in the respective execution order(i);
   determining (312, 314, 320) which combination of execution order and scanning mode is most energy-efficient for executing these n scanning commands;
   executing (321, 322) these n scanning commands, using the most energy-efficient combination of execution order and scanning mode (CLV; CAV).

5. Method according to claim 4, wherein said determining (312, 314, 320) step comprises the steps of:

   determining (312) which one of said n! possible execution orders is most energy-efficient for executing said n scanning commands in CLV mode, and determining the corresponding minimal energy consumption ($E_{L,MIN}$ expected;
   determining (314) which one of said n! possible execution orders is most energy-efficient for executing said n scanning commands in CAV mode, and determining the corresponding minimal energy consumption ($E_{A,MIN}$) expected;
   comparing (320) the thus calculated minimal energy consumption ($E_{L,MIN}$) for CLV mode with the thus calculated minimal energy consumption ($E_{A,MIN}$) for CAV mode.

6. Method according to claim 4, wherein the set of n scanning commands is associated with an overall completion time limit, and wherein, in the step of determining (312, 314, 320) the most energy-efficient combination of execution order and scanning mode, only those combinations are taken into account which comply with such an overall completion time limit.

7. Method according to claim 4, wherein at least one of the scanning commands is associated with an individual completion time limit, and wherein, in the step of determining (312, 314, 320) the most energy-efficient combination of execution order and scanning mode, only those combinations are taken into account which comply with such an individual completion time limit

8. Method (400) according to claim 1, the method comprising the steps of:

receiving a plurality of n scanning commands, and placing these scanning commands in a queue buffer memory (401, 402, 403);
calculating (411), for each of all $2^n$ possible combinations of individual scanning mode settings (CAV, CLV) for these n scanning commands, the corresponding estimated amount of energy ($E_{Ex}(i)$) consumed when these scanning commands are executed in the order as received and stored in the queue;
determining (412) which combination of individual scanning mode settings (CAV, CLV) for these n scanning commands is most energy-efficient for executing these n scanning commands in the order as received and stored in the queue;
executing (421) these n scanning commands in the order as received and stored in the queue, using the most energy-efficient combination of individual scanning mode settings (CAV, CLV) for these n scanning commands.

9. Method according to claim 8, wherein the set of n scanning commands is associated with an overall completion time limit, and wherein, in the step of determining (412) the most energy-efficient combination of individual scanning mode settings, only those combinations are taken into account which comply with such an overall completion time limit

10. Method according to claim 8, wherein at least one of the scanning commands is associated with an individual completion time limit, and wherein, in the step of determining (412) the most energy-efficient combination of individual scanning mode settings, only those combinations are taken into account which comply with such an individual completion time limit.

11. Method (500) according to claim 1, the method comprising the steps of:

receiving a plurality of n scanning commands, and placing these scanning commands in a queue buffer memory (501, 502, 503);
calculating (511), for each of all $2^n \cdot n!$ possible combinations of individual scanning mode settings (CAV, CLV) and possible execution orders of these n scanning commands, the corresponding estimated amount of energy ($E_{Ex}(i)$) consumed when these n scanning commands are executed in the respective execution order(i), using the respective combination of individual scanning mode settings (CAV, CLV) for these n scanning commands;
determining (512) which combination of individual scanning mode settings (CAV, CLV) and execution order of these n scanning commands is most energy-efficient;
executing (521) these n scanning commands using the most energy-efficient combination of individual scanning mode settings (CAV, CLV) and execution order.

12. Method according to claim 11, wherein the set of n scanning commands is associated with an overall completion time limit, and wherein, in the step of determining (512) the most energy-efficient combination of individual scanning mode settings (CAV, CLV) and execution order, only those combinations are taken into account which comply with such an overall completion time limit.

13. Method according to claim 11, wherein at least one of the scanning commands is associated with an individual completion time limit, and wherein, in the step of determining (512) the most energy-efficient combination of individual scanning mode settings (CAV, CLV) and execution order, only those combinations are taken into account which comply with such an individual completion time limit.

14. Disc drive apparatus (1) for writing information to a storage medium (2) and/or for reading information from a storage medium (2), capable of selectively operating in at least a CAV mode and at least a CLV mode, the disc drive apparatus (1) being adapted to execute the method of any of the previous claims.

**Patentansprüche**

1.  Verfahren (100; 200; 300; 400; 500) zum Abtasten einer Spur eines scheibenförmigen Speichermediums, wobei das Verfahren die nachfolgenden Verfahrensschritte umfasst:

    - das Empfangen (101; 201; 301; 401; 501) wenigstens eines Abtastbefehls;
    - das Berechnen (102, 103; 211, 212; 311, 313; 411; 511) von Energieverbrauchsschätzungen bei verschiedenen Abtastmodeeinstellungen (CAV; CLV);
    - das Ermitteln (110; 213; 312; 314, 320; 412; 512) einer mit minimal erwartetem Energieverbrauch assoziierten Abtastmodeeinstellung;
    - das Durchführen (121, 122; 221, 222; 321, 322; 421; 521) des genannten wenigstens einen Abtastbefehls in der auf diese Art und Weise ermittelten Abtastmodeeinstellung.

2.  Verfahren (100; 200) nach Anspruch 1, wobei das Verfahren die nachfolgenden Verfahrensschritte umfasst:

    - das Empfangen (101, 201) eines Abtastbefehls;
    - das Berechnen (102; 211) des geschätzten verbrauchten Energiebetrags ($E_L$), wenn dieser Abtastbefehl in der CLV Mode durchgeführt wird;
    - das Berechnen (103; 212) des geschätzten verbrauchten Energiebetrags ($E_A$), wenn dieser Abtastbefehl in der CAV Mode durchgeführt wird;
    - das Ermitteln (110; 213) welche Abtastmode (CLV; CAV) die meist energieeffiziente zum Durchführen dieses Abtastbefehls ist;
    - das Durchführen (121, 122; 221, 222) dieses Abtastbefehls in der meist energieeffizienten Abtastmode (CLV; CAV).

3.  Verfahren (200) nach Anspruch 2, wobei der Abtastbefehl mit einer Durchführungszeitgrenze ($T_{LIMIT}$) assoziiert ist, wobei das Verfahren weiterhin die nachfolgenden Verfahrensschritte umfasst:

    - das Berechnen (202) der geschätzten Durchführungszeit ($t_L$), wenn dieser Abtastbefehl in der CLV Mode durchgeführt wird;
    - das Berechnen (203) der geschätzten Durchführungszeit ($t_A$), wenn dieser Abtastbefehl in der CAV Mode durchgeführt wird;
    - das Untersuchen (204), ob eine der geschätzten Durchführungszeiten ($t_L$; $t_A$) die Durchführungszeitgrenze ($T_{LIMIT}$) überschreitet;
    - das Ermitteln (230), ob gefunden wird, dass eine der geschätzten Durchführungszeiten ($t_L$; $t_A$) die Durchführungszeitgrenze ($T_{LIMIT}$) überschreitet, welche Abtastmode (CLV; CAV die meist zeiteffiziente Mode ist zum Durchführen dieses Abtastbefehls, und das Durchführen (231, 232) dieses Abtastbefehls in der meist zeiteffizienten Abtastmode (CLV; CAV).

4.  Verfahren (300) nach Anspruch 1, wobei das Verfahren die nachfolgenden Verfahrensschritte umfasst:

    - das Empfangen einer Anzahl n Abtastbefehle, und das speichern dieser Abtastbefehle in einem Schlangenpufferspeicher (301,302,303);
    - das Berechnen (311), und zwar für alle n möglichen Durchführungsaufträge dieser n Abtastbefehle, des entsprechenden geschätzten Energiebetrags ($E_L(i)$), verbraucht, wenn diese Abtastbefehle in der CLV Mode in der betreffenden Durchführungsreihenfolge (i) durchgeführt werden;
    - das Berechnen (313), und zwar für jeden Auftrag aller n möglichen Durchführungsaufträge dieser n Abtastbefehle, wobei der entsprechende geschätzte Energiebetrag ($E_A(i)$), verbraucht, wenn diese Abtastbefehle in CAV Mode in der betreffenden Durchführungsmode (i) durchgeführt werden;
    - das Ermitteln (312, 314, 320), welche Kombination von Durchführungsreihenfolge und Abtastmode zum Durchführen von n Abtastbefehlen am energieeffizientesten ist;
    - das Durchführen (321, 322) dieser n Abtastbefehlen, und zwar unter Anwendung der energieeffizientesten Kombination von Durchführungsreihenfolge und Abtastmode (CLV; CAV).

5. Verfahren nach Anspruch 4, wobei der genannte Ermittlungsschritt (312, 314, 320) die nachfolgenden Verfahrensschritte umfasst:

- das Ermitteln (312), welche Reihenfolge der genannten n möglichen Durchführungsreihenfolgen zum Durchführen der genannten n Abtastbefehlen in der CLV Mode die energieeffizienteste ist, und das Ermitteln des erwarteten entsprechenden minimalen Energieverbrauchs ($E_{L,MIN}$);
- das Ermitteln (314), welche Reihenfolge der genannten n möglichen Durchführungsreihenfolgen zum Durchführen der genannten n Abtastbefehle in der CAV Mode die energieeffizienteste ist und das Ermitteln des erwarteten entsprechenden minimalen Energieverbrauchs ($E_{A, MIN}$);
- das Vergleichen (320) des auf diese Art und Weise berechneten minimalen Energieverbrauchs ($E_{L,MIN}$) für die CLV Mode mit dem auf diese Art und Weise berechneten minimalen Energieverbrauch ($E_{A,MIN}$) für die CAV Mode.

6. Verfahren nach Anspruch 4, wobei der Satz mit n Abtastbefehlen mit einer gesamten Durchführungszeitgrenze assoziiert ist, und wobei in dem Verfahrensschritt der Ermittlung (312, 314, 320) der energieeffizientesten Kombination von Durchführungsreihenfolge und Abtastmode nur diejenigen Kombinationen berücksichtigt werden, die mit einer derartigen gesamten Durchführungszeitgrenze übereinstimmen.

7. Verfahren nach Anspruch 4, wobei wenigstens einer der Abtastbefehle mit einer einzelnen Durchführungszeitgrenze assoziiert ist, und wobei in dem Verfahrensschritt der Ermittlung (312, 314, 320) der energieeffizientesten Kombination von Durchführungsreihenfolge und Abtastmode nur diejenigen Kombinationen berücksichtigt werden, die mit einer derartigen einzelnen Durchführungszeitgrenze übereinstimmen.

8. Verfahren (400) nach Anspruch 1, wobei das Verfahren die nachfolgenden Verfahrensschritte umfasst:

- das Empfangen einer Anzahl von n Abtastbefehlen, und das Speichern dieser Abtastbefehle in einem Schlangenpufferspeicher (401, 402, 403);
- das Berechnen (411), und zwar für jede aller $2^n$ möglichen Kombinationen einzelner Abtastmodeeinstellungen (CAV, CLV) für diese n Abtastbefehle, des entsprechenden geschätzten Energiebetrags ($E_{EX}(i)$), verbraucht, wenn diese Abtastbefehle in der Reihenfolge durchgeführt werden, wie diese empfangen und in der Schlange gespeichert worden sind;
- das Ermitteln (412) welche Kombination einzelner Abtastmodeeinstellungen (CAV, CLV) für diese n Abtastbefehle zum Durchführen dieser n Abtastbefehle in der Reihenfolge, wie empfangen und in der Schlange gespeichert, die energieeffizienteste ist,
- das Durchführen (421) dieser n Abtastbefehle in der Reihenfolge, wie empfangen und in der Schlange gespeichert, und zwar unter Anwendung der energieeffizientesten Kombination einzelner Abtastmodeeinstellungen (CAV, CLV) für diese n Abtastbefehle.

9. Verfahren nach Anspruch 8, wobei der Satz von n Abtastbefehlen mit einer gesamten Durchführungszeitgrenze assoziiert ist, und wobei in dem Verfahrensschritt der Ermittlung (412) der energieeffizientesten Kombination einzelner Abtastmodeeinstellungen, nur diejenigen Kombinationen berücksichtigt werden, die mit einer derartigen gesamten Durchführungszeitgrenze übereinstimmen.

10. Verfahren nach Anspruch 8, wobei wenigstens einer der Abtastbefehle mit einer einzelnen Durchführungszeitgrenze assoziiert wird, und wobei in dem Verfahrensschritt der Ermittlung (412) der energieeffizientesten Kombination von einzelnen Abtastmodeeinstellungen nur diejenigen Kombinationen berücksichtig werden, die mit einer derartigen einzelnen Durchführungszeitgrenze übereinstimmen.

11. Verfahren (500) nach Anspruch 1, wobei das Verfahren die nachfolgenden Verfahrensschritte umfasst:

- das Empfangen einer Anzahl von n Abtastbefehlen, und das Speichern dieser Abtastbefehle in einem Schlangenpufferspeicher (501, 502, 503);
- das Berechnen (511), und zwar für alle $2^n$ möglichen Kombinationen einzelner Abtastmodeeinstellungen (CAV, CLV) und möglichen Durchführungsaufträge dieser n Abtastbefehle, wobei der entsprechende geschätzte Energiebetrag ($E_{EX}(i)$), verbraucht, wenn diese n Abtastbefehle in der betreffenden Durchführungsreihenfolge (i) durchgeführt werden, und zwar unter Anwendung der betreffenden Kombination einzelner Abtastmodeeinstellungen (CAV, CLV) für diese n Abtastbefehle;
- das Ermitteln (512), welche Kombination einzelner Abtastmodeeinstellungen (CAV, CLV) und Durchführungsreihenfolge dieser n Abtastbefehle die energieeffizienteste ist;
- Durchführung (521) dieser n Abtast5befehle unter Anwendung der energieeffizientesten Kombination einzelner Abtastmodeeinstellungen (CAV, CLV) und Durchführungsreihenfolge.

**12.** Verfahren nach Anspruch 11, wobei der Satz mit n Abtastbefehlen mit einer gesamten Durchführungszeitgrenze assoziiert ist, und wobei in dem Verfahrensschritt der Ermittlung (512) der energieeffizientesten Kombination einzelner Abtastmodeeinstellungen (CAV, CLV) und Durchführungsreihenfolge, nur diejenigen Kombinationen berücksichtigt werden, die mit einer derartigen gesamten Durchführungszeitgrenze übereinstimmen.

**13.** Verfahren nach Anspruch 11, wobei wenigstens einer der Abtastbefehle mit einer einzelnen Durchführungszeitgrenze assoziiert wird, und wobei in dem Verfahrensschritt der Ermittlung (512) der energieeffizientesten Kombination einzelner Abtastmodeeinstellungen (CAV, CLV) und Durchführungsreihenfolge, nur diejenigen Kombinationen berücksichtigt werden, die mit einer derartigen einzelnen Durchführungszeitgrenze übereinstimmen.

**14.** Plattenlaufwerkeinrichtung (1) zum Schreiben von Information auf einem Speichermedium (2) und/oder zum Auslesen von Information aus einem Speichermedium (2), die imstande ist, in wenigstens einer CAV Mode und wenigstens einer CLV Mode selektiv zu funktionieren, wobei diese Plattenlaufwerkeinrichtung (1) dazu vorgesehen ist, das Verfahren nach einem der vorstehenden Ansprüche durchzuführen.

**Revendications**

**1.** Procédé (100; 200; 300; 400; 500) pour balayer une piste d'un support de stockage en forme de disque (2), le procédé comprenant les étapes consistant à:

recevoir (101; 201; 301; 401; 501) au moins une instruction de balayage;
calculer (102, 103; 211, 212; 311, 313; 411; 511) des évaluations de consommation d'énergie à des réglages différents de mode de balayage (CAV; CLV);
déterminer (110; 213; 312, 314, 320; 412; 512) un réglage de mode de balayage qui est associé à une consommation d'énergie prévue minimale;
exécuter (121, 122; 221, 222; 321, 322; 421; 521) ladite au moins une instruction de balayage au réglage de mode de balayage ainsi déterminé.

**2.** Procédé (100; 200) selon la revendication 1, le procédé comprenant les étapes consistant à:

recevoir (101; 201) une instruction de balayage;
calculer (102; 211) la quantité prévue d'énergie ($E_L$) qui est consommée lorsque cette instruction de balayage est exécutée dans le mode CLV;
calculer (103; 212) la quantité prévue d'énergie ($E_A$) qui est consommée lorsque cette instruction de balayage est exécutée dans le mode CAV;
déterminer (110; 213) quel mode de balayage (CLV; CAV) est le plus efficace quant à l'énergie pour exécuter cette instruction de balayage;
exécuter (121, 122; 221, 222) cette instruction de balayage dans le mode de balayage le plus efficace quant à l'énergie (CLV; CAV).

**3.** Procédé (200) selon la revendication 2, dans lequel l'instruction de balayage est associée à une limite de délai d'exécution ($T_{LIMIT}$), le procédé comprenant encore les étapes consistant à:

calculer (202) le délai d'exécution prévu ($t_L$) lorsque cette instruction de balayage est exécutée dans le mode CLV;
calculer (203) le délai d'exécution prévu ($t_A$) lorsque cette instruction de balayage est exécutée dans le mode CAV;
examiner (204) si l'un quelconque des délais d'exécution prévus ($t_L$; $t_A$) dépasse la limite de délai d'exécution ($T_{LIMIT}$);
déterminer (230), s'il s'est avéré que l'un quelconque des délais d'exécution prévus ($t_L$; $t_A$) dépasse la limite de délai d'exécution ($T_{LIMIT}$), quel mode de balayage (CLV; CAV) est le plus efficace quant au temps pour exécuter cette instruction de balayage et pour exécuter (231, 232) cette instruction de balayage dans le mode de balayage le plus efficace quant au temps (CLV; CAV).

**4.** Procédé (300) selon la revendication 1, le procédé comprenant les étapes consistant à :

recevoir une pluralité de n instructions de balayage et à placer ces instructions de balayage dans une mémoire tampon de file d'attente (301,302,303);

calculer (311), pour chacun de tous les n! ordres d'exécution possibles de ces n instructions de balayage, la quantité prévue correspondante d'énergie ($E_L(i)$) qui est consommée lorsque ces instructions de balayage sont exécutées dans le mode CLV dans l'ordre d'exécution respectif (i);

calculer (313), pour chacun de tous les n! ordres d'exécution possibles de ces n instructions de balayage, la quantité prévue correspondante d'énergie ($E_A(i)$) qui est consommée lorsque ces instructions de balayage sont exécutées dans le mode CAV dans l'ordre d'exécution respectif (i);

déterminer (312, 314, 320) quelle combinaison d'ordre d'exécution et de mode de balayage est la plus efficace quant à l'énergie pour exécuter ces n instructions de balayage;

exécuter (321, 322) ces n instructions de balayage en utilisant la combinaison la plus efficace quant à l'énergie d'ordre d'exécution et de mode de balayage (CLV; CAV).

**5.** Procédé selon la revendication 4, dans lequel ladite étape de détermination (312, 314, 320) comprend les étapes consistant à :

déterminer (312) lequel desdits n! ordres d'exécution possibles est le plus efficace quant à l'énergie pour exécuter lesdites n instructions de balayage dans le mode CLV et à déterminer la consommation d'énergie minimale correspondante ($E_{L,MIN}$) qui est prévue;

déterminer (314) lequel desdits n! ordres d'exécution possibles est le plus efficace quant à l'énergie pour exécuter lesdites n instructions de balayage dans le mode CAV et à déterminer la consommation d'énergie minimale correspondante ($E_{A,MIN}$) qui est prévue;

comparer (320) la consommation d'énergie minimale ainsi calculée ($E_{L,MIN}$) pour le mode CLV avec la consommation d'énergie minimale ainsi calculée ($E_{A,MIN}$) pour le mode CAV.

**6.** Procédé selon la revendication 4, dans lequel l'ensemble des n instructions de balayage est associé à une limite de délai d'exécution globale et dans lequel, dans l'étape consistant à déterminer (312, 314, 320) la combinaison la plus efficace quant à l'énergie de l'ordre d'exécution et du mode de balayage, seules ces combinaisons sont prises en considération qui se conforment à une telle limite de délai d'exécution globale.

**7.** Procédé selon la revendication 4, dans lequel au moins une des instructions de balayage est associée à une limite de délai d'exécution individuel et dans lequel, dans l'étape consistant à déterminer (312, 314, 320) la combinaison la plus efficace quant à l'énergie de l'ordre d'exécution et du mode de balayage, seules ces combinaisons sont prises en considération qui se conforment à une telle limite de délai d'exécution globale.

**8.** Procédé (400) selon la revendication 1, le procédé comprenant les étapes consistant à :

recevoir une pluralité de n instructions de balayage et à placer ces instructions de balayage dans une mémoire tampon de file d'attente (401, 402, 403);

calculer (411), pour chacune de toutes les $2^n$ combinaisons possibles de réglages individuels de mode de balayage (CAV, CLV) pour ces n instructions de balayage, la quantité prévue correspondante d'énergie ($E_{EX}(i)$) qui est consommée lorsque ces instructions de balayage sont exécutées dans l'ordre comme reçu et stocké dans la file d'attente;

déterminer (412) quelle combinaison de réglages individuels de mode de balayage (CAV, CLV) pour ces n instructions de balayage est la plus efficace quant à l'énergie pour exécuter ces n instructions de balayage dans l'ordre comme reçu et stocké dans la file d'attente;

exécuter (421) ces n instructions de balayage dans l'ordre comme reçu et stocké dans la file d'attente en utilisant la combinaison la plus efficace quant à l'énergie de réglages individuels de mode de balayage (CAV, CLV) pour ces n instructions de balayage.

**9.** Procédé selon la revendication 8, dans lequel l'ensemble de n instructions de balayage est associé à une limite de délai d'exécution globale et dans lequel, dans l'étape consistant à déterminer (412) la combinaison la plus efficace quant à l'énergie de réglages individuels de mode de balayage, seules ces combinaisons sont prises en considération qui se conforment à une telle limite de délai d'exécution globale.

**10.** Procédé selon la revendication 8, dans lequel au moins une des instructions de balayage est associée à une limite de délai d'exécution globale et dans lequel, dans l'étape consistant à déterminer (412) la combinaison la plus efficace quant à l'énergie de réglages individuels de mode de balayage, seules ces combinaisons sont prises en considération qui se conforment à une telle limite de délai d'exécution globale.

11. Procédé (500) selon la revendication 1, le procédé comprenant les étapes consistant à:

recevoir une pluralité de n instructions de balayage et à placer ces instructions de balayage dans une mémoire tampon de file d'attente (501, 502, 503);

calculer (511), pour chacune de toutes les $2^n \cdot n!$ combinaisons possibles de réglages individuels de mode de balayage (CAV, CLV) et d'ordres d'exécution possibles de ces n instructions de balayage, la quantité prévue correspondante d'énergie ($E_{EX}(i)$) qui est consommée lorsque ces instructions de balayage sont exécutées dans l'ordre d'exécution respectif (i) en utilisant la combinaison respective de réglages individuels de mode de balayage (CAV, CLV) pour ces n instructions de balayage;

déterminer (512) quelle combinaison de réglages individuels de mode de balayage (CAV, CLV) et d'ordre d'exécution de ces n instructions de balayage est la plus efficace quant à l'énergie;

exécuter (521) ces n instructions de balayage en utilisant la combinaison la plus efficace quant à l'énergie de réglages individuels de mode de balayage (CLV, CAV) et d'ordre d'exécution.

12. Procédé selon la revendication 11, dans lequel l'ensemble de n instructions de balayage est associé à une limite de délai d'exécution globale et dans lequel, dans l'étape consistant à déterminer (512) la combinaison la plus efficace quant à l'énergie de réglages individuels de mode de balayage (CAV, CLV) et d'ordre d'exécution, seules ces combinaisons sont prises en considération qui se conforment à une telle limite de délai d'exécution globale.

13. Procédé selon la revendication 11, dans lequel au moins une des instructions de balayage est associée à une limite de délai d'exécution individuelle et dans lequel, dans l'étape consistant à déterminer (512) la combinaison la plus efficace quant à l'énergie de réglages individuels de mode de balayage (CAV, CLV) et d'ordre d'exécution, seules ces combinaisons sont prises en considération qui se conforment à une telle limite de délai d'exécution globale.

14. Appareil d'entraînement de disque (1) pour écrire de l'information sur un support de stockage (2) et/ou pour lire de l'information à partir d'un support de stockage (2) qui est capable de fonctionner sélectivement dans au moins un mode CAV et dans au moins un mode CLV, l'appareil d'entraînement de disque (1) étant adapté de manière à mettre en oeuvre le procédé selon l'une quelconque des revendications précédentes 1 à 13.

FIG.1

FIG.2A

FIG.2B

FIG.3A

FIG.3B

FIG.4

FIG.5A

FIG.5B

FIG.6

FIG.7

300

```
         ┌──────────────────────┐ ─ 301
         │   RECEIVE COMMAND     │
         └──────────────────────┘
                    │
         ┌──────────────────────┐ ─ 302
         │    ADD TO QUEUE       │
         └──────────────────────┘
                    │
                    │          ─ 303
    N    ╱────────────────────────╲
◄────────┤   T WAIT PASSED ?       │
         ╲────────────────────────╱
                    │ Y
                    │
         ┌──────────────────────────────┐ ─ 311
         │  ESTIMATE E L(i) FOR ALL n!   │
         │  POSSIBLE EXECUTION ORDERS    │
         └──────────────────────────────┘
                    │
         ┌──────────────────────┐ ─ 312
         │  DETERMINE E L,MIN    │
         └──────────────────────┘
                    │
         ┌──────────────────────────────┐ ─ 313
         │  ESTIMATE E A(i) FOR ALL n!   │
         │  POSSIBLE EXECUTION ORDERS    │
         └──────────────────────────────┘
                    │
         ┌──────────────────────┐ ─ 314
         │  DETERMINE E A,MIN    │
         └──────────────────────┘
                    │      ─ 320
         ╱────────────────────────╲  Y
         │  E L,MIN < E A,MIN ?     ├────────┐
         ╲────────────────────────╱         │
                    │ N                      │
               ─ 322│                   ─ 321│
      ┌──────────────────┐      ┌──────────────────┐
      │  EXECUTE ALL      │      │  EXECUTE ALL      │
      │  COMMANDS IN      │      │  COMMANDS IN      │
      │  CAV MODE, IN     │      │  CLV MODE, IN     │
      │  SPECIAL ORDER    │      │  SPECIAL ORDER    │
      └──────────────────┘      └──────────────────┘
```

FIG.8

400

RECEIVE COMMAND — 401

ADD TO QUEUE — 402

$T_{WAIT}$ PASSED ? — 403

N

Y

ESTIMATE $E_{EX}(i)$ FOR ALL $2^n$ MODE SETTING POSSIBILITIES — 411

DETERMINE MODE SETTING (i) WITH $E_{EX,MIN}$ — 412

EXECUTE ALL COMMANDS IN ORDER OF QUEUE WITH INDIVIDUAL MODE SETTING (i) — 421

FIG.9

500

RECEIVE COMMAND — 501

ADD TO QUEUE — 502

N — $T_{WAIT}$ PASSED ? — 503

Y

ESTIMATE $E_{EX}(i)$ FOR ALL $2^n \cdot n!$ POSSIBLE COMBINATIONS OF EXECUTION ORDER AND MODE SETTING — 511

DETERMINE COMBINATION WITH $E_{EX,MIN}$ — 512

EXECUTE ALL COMMANDS IN SPECIAL ORDER WITH INDIVIDUAL MODE SETTING — 521

FIG.10

**EP 1 728 249 B1**

## REFERENCES CITED IN THE DESCRIPTION

### Patent documents cited in the description

- EP 1052638 A